# EUROPÄISCHE PATENTSCHRIFT

(11) **EP 1 889 020 B1**
(45) Veröffentlichungstag und Bekanntmachung des Hinweises auf die Patenterteilung: **17.04.2013**
(21) Anmeldenummer: 06741629.7
(22) Anmeldetag: 07.06.2006
(51) Int. Cl.: G01L 1/16, G01L 19/02

(54) **DRUCKSENSOR MIT AKTIVER UND PASSIVER BESCHLEUNIGUNGSKOMPENSATION**
PRESSURE SENSOR WITH ACTIVE AND PASSIVE ACCELERATION COMPENSATION
CAPTEUR DE PRESSION A COMPENSATION D'ACCELERATION ACTIVE ET PASSIVE

(30) Priorität: 10.06.2005 CH 10112005
(43) Veröffentlichungstag der Anmeldung: 20.02.2008
(73) Patentinhaber: Kistler Holding AG, 8408 Winterthur (CH)
(72) Erfinder: CAVALLONI, Claudio, CH-8105 Regensdorf (CH); KARST, Dieter, CH-8260 Stein Am Rhein (CH); WOLFER, Peter, CH-8451 Kleinandelfingen (CH); BRECHBÜHL, Stefan, CH-8570 Weinfelden (CH)
(86) Internationale Anmeldenummer: PCT/CH2006/000304
(87) Internationale Veröffentlichungsnummer: WO 2006/131015

(56) Entgegenhaltungen:
- EP-A- 0 902 267
- GB-A- 1 194 071
- US-A- 2 164 638
- US-A- 3 349 259
- US-A- 3 402 306
- US-A- 3 566 163
- US-A- 3 651 353
- US-A- 3 857 287
- US-A- 4 016 437

## Beschreibung

### Technisches Gebiet

Die Erfindung betrifft einen beschleunigungskompensierten Druckaufnehmer gemäss Oberbegriff von Anspruch 1.

### Stand der Technik

Für die Messung dynamischer Druckvorgänge in gasförmigen oder flüssigen Medien, insbesondere an Motoren und Turbo-Systemen, sind Druckaufnehmer gefragt, welche direkt in die vibrierenden Gehäusewände solcher Maschinen montiert werden können, ohne dass sie deren Beschleunigungskräfte in das zu messende Drucksignal einstreuen. Üblicherweise werden für solche Messungen piezoelektrische Druckaufnehmer verwendet, besonders wenn es sich um hochdynamische Vorgänge oder um Messungen in Temperaturbereichen von über 200 °C handelt.

Für solche Anwendungen stehen zwei Arten von Drucksensoren zur Verfügung. Das einfachere aktive Prinzip umfasst Messkristalle hinter einer Membran mit einer ersten Masse sowie einen elektrisch entgegengeschalteten Kompensations-Kristallsatz in Form einer Piezoplatte, welche durch eine zweite Masse von den Messkristallen beabstandet angeordnet ist. Diese beiden Massen sind so bemessen, dass eine optimale Beschleunigungskompensation erreicht wird. Nachteilig an dieser Anordnung ist, dass durch die Montage eines solchen Sensors am dafür vorgesehenen seitlichen Gewinde eine Verspannung der Messkristalle hervorgerufen wird, welche das Messsignal verfälscht. Zudem können durch Deformationen an der Struktur, beispielsweise am Zylinderkopf, zusätzliche Verspannungen an den Messkristallen auftreten. Diese Methode ist beispielsweise beschrieben von G. Gautschi in "Piezoelectric Sensors", Springer Verlag, 2002, in Kapitel 8.6, insbesondere in Fig. 8.12.

Die GB 1,194,071 beschreibt einen vergleichbaren Sensor, bei dem die Elektroden der Kompensationskristalle geteilt sind.

Ein weiteres passives Prinzip ist in der EP 0902267 dargestellt. Diese beschreibt einen Drucksensor mit nur einem Kristallsatz, wobei die beiden Massen vor und hinter dem Kristallsatz zu einem geschlossenen, frei im Gehäuse schwingenden Element verbunden werden, indem sie je mit Federelementen am einem gemeinsamen Flansch verbunden sind, der wiederum am Einbauende am Gehäuse angebracht ist. Die Federsteifigkeiten und die Massen sind dabei derart aufeinander abgestimmt, dass, im Falle einer auf das Gehäuse einwirkenden axialen Beschleunigung, keine resultierende Kraft auf das Messelement wirkt. Diese Drucksensoren arbeiten sehr gut, solange der Durchmesser des schwingenden Innenteils in derselben Grössenordnung liegt wie die Höhe des Messkristalls. Bei sehr kleinen zugelassenen Abmessungen der Aussendurchmesser der Sensoren wird gezwungenermassen das Innenteil turmartig lang, einerseits durch einen hohen Messkristall, andererseits durch eine grosse geforderte hintere Masse. Das hat zur Folge, dass der Drucksensor sehr empfindlich wird auf Querbeschleunigungen, welche zu Fehlmessungen führen.

Es ist zu beachten, dass diese beiden Prinzipien sehr unterschiedlich arbeiten. Bei der ersten bekannten Ausführung verläuft der Kraftfluss durch die Kristalle. Bei der zweiten Ausführung hingegen wird bei der Anbringung einer Kraft kein Signal am Messkristall registriert, da dieser nicht im Kraftfluss liegt. Zudem werden in der zweiten Ausführung typischerweise Stabkristalle mit Transversaleffekt verwendet, während in der ersten Ausführung Plattenkristalle mit Longitudinaleffekt verwendet werden. Der Vorteil der Stabkristalle mit Transversaleffekt liegen in der viel höheren Empfindlichkeit.

### Darstellung der Erfindung

Aufgabe der vorliegenden Erfindung ist es, einen Drucksensor eingangs erwähnter Art anzugeben, welcher unempfindlich ist gegen Verspannungen beim Einbauen und welcher auch in kleinen Abmessungen gute Messwerte liefert.

Die Aufgabe wird gelöst durch die Kennzeichen des unabhängigen Patentanspruchs.

Die der Erfindung zugrunde liegende Idee besteht darin, dass der erfindungsgemässe Drucksensor zusätzlich zu einer passiven Beschleunigungskompensation durch Abstimmung von Steifigkeiten und Massen, welche lediglich einen Teil der Beschleunigung kompensiert, einen zweiten Messkristall aufweist, welcher den verbleibenden Teil der Beschleunigung kompensiert, wodurch die Bauhöhe und somit die Empfindlichkeit auf Querbeschleunigungen stark vermindert wird.

### Kurze Beschreibung der Zeichnungen

Im Folgenden wird die Erfindung unter Beizug der Zeichnungen näher erklärt. Es zeigen
- Fig. 1: eine schematische Darstellung eines piezoelektrischen Druckaufnehmers im Schnitt, mit zwei in Serie gegeneinander geschalteten Kristallsätzen nach dem Stand der Technik;
- Fig. 2: eine schematische Darstellung eines weiteren piezoelektrische Druckaufnehmers im Schnitt, mit abgestimmten Steifigkeiten und Massen für die Beschleunigungskompensation nach dem Stand der Technik;
- Fig. 3: eine schematische Darstellung eines erfindungsgemässen piezoelektrischen Druckaufnehmers;
- Fig. 4: eine schematische Darstellung eines erfindungsgemässen piezoelektrischen Druckaufnehmers in einer alternativen Ausführungsform.

### Wege zur Ausführung der Erfindung

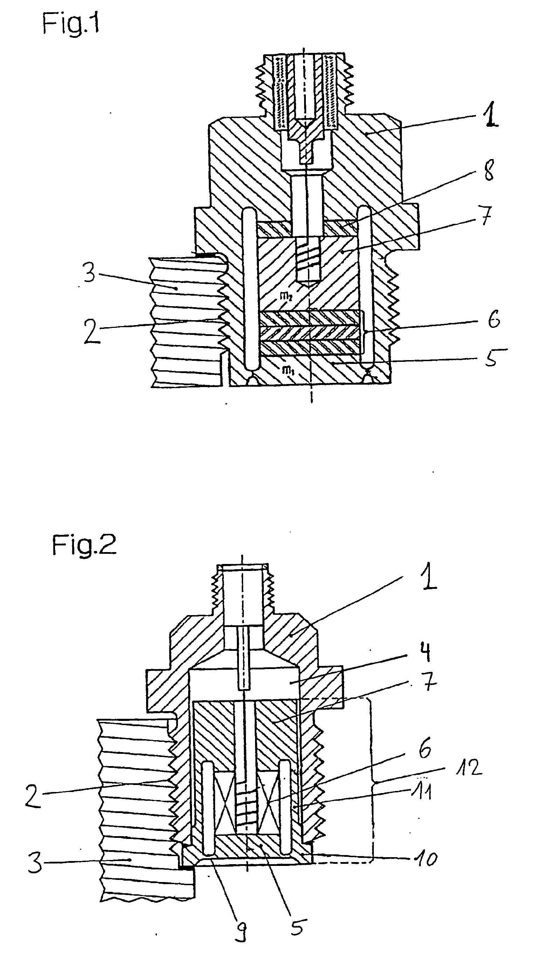

Die Fig. 1 zeigt in einer schematischen Darstellung einen piezoelektrischen Druckaufnehmer nach dem Stand der Technik im Schnitt. Dieser Druckaufnehmer umfasst ein Gehäuse 1 mit einem Gewinde 2 zum Einbauen in ein Bauteil 3. Der Innenraum 4 des Gehäuse 1 ist abgeschlossen durch eine dem Druck aussetzbaren, abschliessenden Membran 5 mit einer ersten Masse. Im Innenraum 4 des Gehäuses 1 ist hinter dieser Membran 5 ein Mess-Kristallsatz 6 angebracht, anschliessend eine zweite Masse 7, gefolgt von einem Kompensations-Kristallsatz 8, welcher rückseitig wiederum am Gehäuse 1 aufliegt. Die Kristalle 6, 8 sind über das Gehäuse 1 und die Membran 5 vorgespannt. Anstelle von Kristallen kann auch anderes piezoelektrisches Material verwendet werden, insbesondere eine Keramik mit äquivalenter Wirkung. Die beiden Massen 5, 7 sind insbesondere derart ausgelegt, dass die Differenz der gemessenen Ladungen am Mess-Kristallsatz 6 und am Kompensationskristall 8, die ausschliesslich von einer axialen Beschleunigung herrühren, gleich null ist. Dadurch reduziert sich das Nutzdrucksignal um etwa einen Drittel des Maximalwertes, was ein grosser Nachteil ist, weil in vielen Fällen Amplituden von wenigen Millibar gemessen werden müssen. Zudem hat sich gezeigt, dass durch einen Anschluss von zusätzlichen Massen an das Druckaufnehmergehäuse 1, wie Stecker- oder Metallkabelanschlüsse, die Beschleunigungskompensation sehr stark variieren kann.

In der Fig. 2 ist eine schematische Darstellung eines weiteren piezoelektrischen Druckaufnehmers nach dem Stand der Technik im Schnitt dargestellt. Diese Anordnung umfasst wiederum ein Gehäuse 1 mit einem Innenraum 4, welcher durch eine Membran 5 mit einer ersten Masse über eine erste axial elastische Verbindung 9 an einem Flansch 10 angeschlossen ist. Hinter der Membran 5 ist ein Messkristall 6 angeordnet und hinter diesem eine zweite Masse 7. Diese zweite Masse 7 ist über eine zweite axial elastische Verbindung 11 am Flansch 10 befestigt. Diese über den Flansch 10 verbundenen Komponenten, umfassend die beiden Massen 5, 7, die beiden elastischen Verbindungen 9, 11 sowie den Messkristall 6, bilden ein Innenteil 12, welches axial frei im Gehäuse 1 schwingen kann und das Gehäuse 1 nur über die Befestigung am Flansch 10 berührt. Durch diese Entkopplung des Innenteils 12 vom Gehäuse 1 entfällt auch ein möglicher störender Einfluss durch die Montage an einem Bauteil 3. In diesem Aufbau müssen die beiden Steifigkeiten der elastischen Verbindungen 9, 11 sowie die beiden Massen 5, 7 derart aufeinander abgestimmt werden, dass eine axiale Beschleunigung, welche auf den Drucksensor einwirkt, am Messkristall 6 kein Signal auslöst, weil die Auslenkung der beiden Grenzflächen des Messkristalls 6, welche an die beiden Massen 5, 7 angrenzen, jeweils identisch ist.

Weil in dieser Anordnung im Gegensatz zur Anordnung in Fig. 1 das Innenteil 12 rückseitig nicht am Gehäuse 1 abgestützt sein darf, ist der störende Einfluss von Querbeschleunigungen, die auf das Innenteil 12 einwirken, sehr gross. Zudem wird das Innenteil 12 turmartig lang, wenn die Montageöffnung für den Drucksensor einen kleinen Durchmesser aufweist und gleichzeitig eine hohe Empfindlichkeit gefordert ist. Dadurch wird der Störeinfluss von Querbeschleunigungen nochmals grösser.

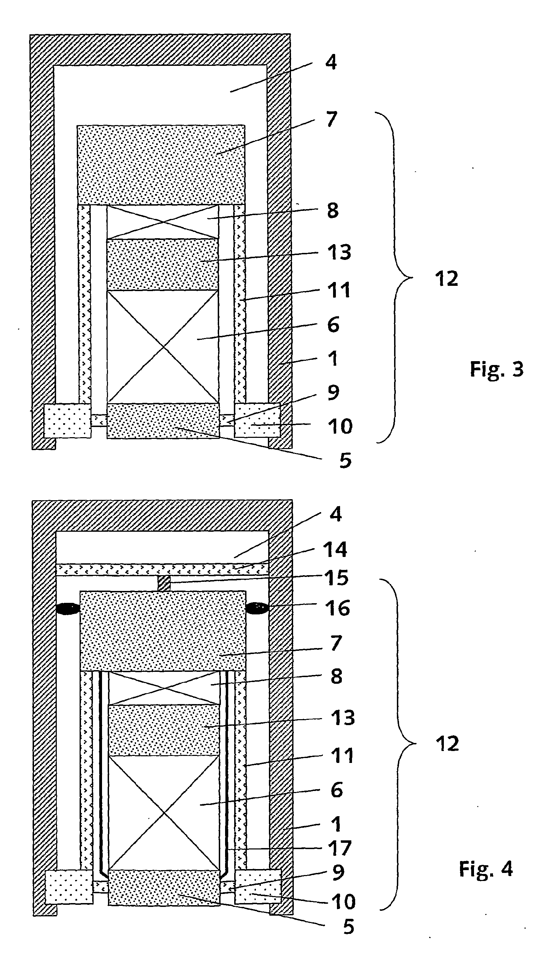

In der Fig. 3 ist eine schematische Darstellung eines erfindungsgemässen piezoelektrischen Druckaufnehmers gegeben. Dieser Drucksensor umfasst wiederum ein Gehäuse 1 mit einem Innenraum 4 sowie ein Innenteil 12, welches lediglich an einem Flansch 10 am Gehäuse 1 angebracht ist. Ansonsten ist das Innenteil 12 in axialer Richtung frei schwingend. Am Flansch 10 ist an einer ersten elastischen Verbindung 9 eine den Innenraum 4 abschliessende Membran 5 mit einer ersten Masse angebracht. An einer zweiten elastischen Verbindung 11, welche ebenfalls am Flansch 10 angebracht ist, ist eine zweite Masse 7 angebracht. Zwischen diesen beiden Massen 5, 7 sind ein erster Messkristall 6 sowie ein zweiter Kompensationskristall 8 angebracht, welche ihrerseits durch eine dritte Masse 13 beabstandet voneinander sind.

Die erfinderische Idee dieser Anordnung besteht nun darin, einen Teil der Beschleunigung aktiv durch einen Kompensationskristall rechnerisch auszugleichen, die Feinabstimmung aber passiv durch eine Abstimmung von Federkräften und Massen zu erreichen. Dadurch wird der erfindungsgemässe Sensor erheblich weniger gross als wenn nur eine passive Kompensation angewandt würde. Die Schwierigkeit besteht nun darin, die Kompensation der Beschleunigung auf zwei Mechanismen so zu verteilen, dass keiner der Nachteile der einzelnen Anordnungen Überhand gewinnt. Dazu wird allerdings nicht, wie in Fig. 1, die zweite Masse 7 über einen zweiten Messkristall 6 am Gehäuse 1 abgestützt. In der erfinderischen Anordnung wird eine dritte Masse 13 eingesetzt. Diese dritte Masse 13 wird, zusammen mit dem Kompensationskristall 8, zwischen dem Messkristall 6 und der zweite Masse 7 angebracht. Die hier fehlende hintere Abstützung des Kompensationskristalls 8 wird durch die zweite elastische Verbindung 11 erreicht, welche durch die zweite Masse 7 eine hintere Abstützung des Kompensationskristalls 8 ermöglicht.

Zur Abstimmung des Drucksensors, namentlich zur Gewährleistung einer guten axialen Beschleunigungskompensation, müssen nun verschiedene Einflüsse berücksichtigt werden. Das Ziel ist, dass die beiden Kristalle 6, 8 bei einer axialen Beschleunigung stets dieselben Werte angeben. Dadurch wird die bei einer Messung gebildete Differenz der beiden Signale, verursacht durch eine axiale Bescheunigung, null. Andererseits soll der durch einen Druck auf die Membrane 5 erzielte Messwert am Messkristall 6 möglichst gross sein im Gegensatz zu dem Messwert, der am Kompensationskristall 8 erzeugt wird, um dadurch so wenig wie möglich an Messdynamik und Empfindlichkeit einzubüssen.

Bei diesem Funktionsprinzip wird der Messkristall 6, im Gegensatz zur Fig. 2, bei einer axialen Beschleunigung ein von Null verschiedenes Signal abgeben, da die Kompensation durch die hintere Masse, in diesem Fall gebildet durch die zweite Masse 7, die dritte Masse 13 sowie den Kompensationskristall 8 lediglich einen Teil der Beschleunigung kompensiert. Der Messkristall 6 wird durch eine axiale Beschleunigung zwar wenig, aber dennoch gestaucht und gestreckt werden.

Als zweites müssen die verschiedenen Massen 5, 7, 13 und die Steifigkeiten der Verbindungen 9, 11 derart aufeinander abgestimmt werden, dass die beiden Signale der Kristalle 6, 8 bei einer axiale Beschleunigung stets gleich sind. Diese Abstimmung wird am Innenteil 12 vorgenommen, bevor es ins Gehäuse 1 eingesetzt wird.

Zusätzlich kann am Innenteil 12 eine Querstütze 14 angebracht werden, welche radial sehr steif, gleichzeitig aber axial sehr weich ist. Dadurch können Querkräfte aufgefangen werden, welche auf das Innenteil 12 wirken.

In Fig. 4 sind verschiedene alternative Varianten solcher Querstützen 14 dargestellt. Natürlich wird jeweils nur eine Variante angebracht werden. Einerseits kann die Querstütze 14 in Form einer Membran angebracht sein, die an der zweiten Masse 7 angebracht ist. Diese kann, wie hier dargestellt, durch eine Befestigung 15 beabstandet an der zweiten Masse 7 angebracht sein. An der Gehäuseinnenwand kann die Querstütze 14 fest gefestigt oder gleitend angebracht sein.

Andererseits kann sie seitlich der zweiten Masse 7 zwischen dieser und der Gehäuseinnenwand angebracht sein. An Stelle einer Membran könnte auch ein O-Ring 16 die Funktion dieser seitlichen Abstützung übernehmen.

Eine weitere Verbesserung kann erzielt werden, indem eine zusätzliche Spannhülse 17 zwischen der ersten Masse 5 und der zweiten Masse 7 angebracht wird, wie in Fig. 4 dargestellt. Diese Spannhülse 17 erzeugt die Vorspannung der Kristalle 6, 8 und entlastet somit die erste elastische Verbindung 9, die sonst die Last der Vorspannung tragen müsste.

Die Kristalle 6, 8 können aus verschiedenen piezoelektrischen Materialien bestehen und/oder verschiedene kristallographische Orientierungen aufweisen. Dadurch können weitere Optimierungen vorgenommen werden zur Miniaturisierung des Drucksensors. Vorteilhafterweise weist der erster Messkristall 6 Transversaleffekt auf. Dadurch kann die Empfindlichkeit erhöht werden.

### Bezugszeichenliste

- 1: Gehäuse
- 2: Gewinde
- 3: Bauteil
- 4: Innenraum
- 5: Membran, erste Masse
- 6: Mess-Kristallsatz oder Messkristall
- 7: Zweite Masse
- 8: Kompensations-Kristallsatz oder Kompensationskristall
- 9: Erste elastische Verbindung
- 10: Flansch
- 11: Zweite elastische Verbindung
- 12: Innenteil
- 13: Dritte Masse
- 14: Querstütze
- 15: Befestigung
- 16: O-Ring
- 17: Spannhülse

## Patentansprüche

1. Beschleunigungskompensierter Druckaufnehmer, beispielsweise zur Messung von dynamischen Vorgängen in gasförmigen oder flüssigen Medien, umfassend ein äusseres Gehäuse (1) sowie ein vormontiertes Innenteil (12) mit einem Flansch (10) am Einbauende, wobei das Innenteil (12) lediglich am Flansch (10) am Gehäuse (1) fest verbunden ist, wobei am Flansch (10) über eine erste elastische Verbindung (9) eine erste Masse (5) und über eine zweite elastische Verbindung (11) eine zweite Masse (7) verbunden ist, und wobei zwischen diesen Massen (5, 7) ein erster Messkristall (6) unter Vorspannung angebracht ist,
**dadurch gekennzeichnet,**
- **dass** zwischen dem ersten Messkristall (6) und der zweiten Masse (7) eine dritte Masse (13) und ein Kompensationskristall (8) angeordnet sind, wobei der Kompensationskristall (8) dem ersten Messkristall (6) entgegengesetzt geschaltet ist,
- und **dass** die beiden Steifigkeiten der elastischen Verbindungen (9, 11) sowie die drei Massen (5, 7, 13) derart aufeinander abgestimmt sind, dass die an den Kristallen (6,8) ermittelten Messwerte, welche durch eine axiale Beschleunigung auf das Gehäuse (1) entstehen, entgegengesetzt gleich groß sind.

2. Druckaufnehmer nach Anspruch 1, **dadurch gekennzeichnet, dass** das Innenteil (12) am dem Flansch (10) gegenüberliegenden Ende quer zur Achse durch eine Querstütze (14) zum Gehäuse (1) hin stabilisiert ist.

3. Druckaufnehmer nach Anspruch 2, **dadurch gekennzeichnet, dass** die Querstütze (14) aus einer Membran besteht, welche axial weich und radial steif ist.

4. Druckaufnehmer nach Anspruch 2, **dadurch gekennzeichnet, dass** die Querstütze (14) aus einem O-Ring (16), angeordnet zwischen der zweiten Masse (7) und dem Gehäuse (1), besteht.

5. Druckaufnehmer nach Anspruch 2, **dadurch gekennzeichnet, dass** die Querstütze (14) axial gleitend am Gehäuse (1) angebracht ist.

6. Druckaufnehmer nach einem der vorhergehenden Ansprüche, **dadurch gekennzeichnet, dass** die Kristalle (6, 8) und die dritte Masse (13) über eine Spannhülse (17) vorgespannt sind, welche zwischen der ersten (5) und der zweiten Masse (7) angebracht ist.

7. Druckaufnehmer nach einem der vorhergehenden Ansprüche, **dadurch gekennzeichnet, dass** die Kristalle (6, 8) aus verschiedenen piezoelektrischen Materialien bestehen.

8. Druckaufnehmer nach einem der vorhergehenden Ansprüche, **dadurch gekennzeichnet, dass** die Kristalle (6, 8) verschiedene kristallographischen Orientierungen aufweisen.

9. Druckaufnehmer nach einem der vorhergehenden Ansprüche, **dadurch gekennzeichnet, dass** der erster Messkristall (6) Transversaleffekt aufweist.

## Claims

1. An acceleration-compensated pressure pick-up, for example for the measurement of dynamic processes in gaseous or liquid media, comprising an external housing (1) as well as a pre-assembled inner part (12) having a flange (10) at its assembly end wherein the inner part (12) is securely fixed to the housing (1) only at the flange (10) wherein said flange (10) is connected via a first resilient connection (9) to a first mass (5) and via a second resilient connection (11) to a second mass (7), and wherein between said masses (5, 7) is inserted a first measurement crystal (6) under pre-tension **characterized in**
- **that** between the first measurement crystal (6) and the second mass (7) are arranged a third mass (13) and a compensation crystal (8) wherein the compensation crystal (6)is electrically connected in opposite to the first measurement crystal (6),
- and in that the two rigidities of the resilient connections (9, 11) as well as the three masses (5, 7, 13) are matched in such a way that the measurement values detected at the crystals (6, 8) and generated by an axial acceleration acting on the housing (1) have the same value, but different sign.

2. A pressure pick-up according to claim 1 **characterized in that** the inner part (12) is stabilized with respect to the housing (1) at the end opposite to the flange (10) transversally to the axis by means of a crossbeam (14).

3. A pressure pick-up according to claim 2 **characterized in that** the crossbeam (14) is made of a membrane which is axially soft and radially rigid.

4. A pressure pick-up according to claim 2 **characterized in that** the crossbeam (14) consists of an O ring (16) arranged between the second mass (7) and the housing (1).

5. A pressure pick-up according to claim 2 **characterized in that** the crossbeam (14) is fixed to the housing (1) in an axially sliding manner.

6. A pressure pick-up according to any of the preceding claims **characterized in that** the crystals (6, 8) and the third mass (13) are pre-tensioned by means of a tension sleeve (17) arranged between the first (5) and the second mass (7).

7. A pressure pick-up according to any of the preceding claims **characterized in that** the crystals (6, 8) are made of different piezoelectric materials.

8. A pressure pick-up according to any of the preceding claims **characterized in that** the crystals (6, 8) exhibit different crystallographic orientations.

9. A pressure pick-up according to any of the preceding claims **characterized in that** the first measurement crystal (6) exhibits a transversal effect.

## Revendications

1. Un capteur de pressionavec compensation de l'accélération, par exemple pour la mesure des processus dynamiques dans les milieux liquides et gazeux, comprenant un boîtier externe (1) ainsi qu'une partie interne pré-assemblée (12) ayant une bride (10) à son extrémité de montage dans lequel ladite partie interne (12) est fixée solidement au boîtier (1) seulement au niveau de la bride (10), ladite bride (10) étant connectée par l'intermédiaire d'une première jonction élastique (9) à une première masse (5) et par l'intermédiaire d'une deuxième jonction élastique (11) à une deuxième masse (7), et entre lesdites masses (5, 7) étant inséré un première cristal de mesure (6) sous pré-tension
**caractérisé en ce**
- **qu'**entre le première cristal de mesure (6) et la deuxième masse (7) sont disposés une troisième masse (13) et un cristal de compensation (8), ledit cristal de compensation (6) étant relié électriquement opposé au première cristal de mesure (6),
- et en ce que les deux rigidités desdits jonctions élastiques (9, 11) ainsi que les trois masses (5, 7, 13) sont adaptés les uns aux autres de façon telle que les valeurs de mesure détectées au niveau des cristaux (6, 8) et générées par une accélération axiale agissant sur le boîtier (1) ont la même valeur, mais un signe opposé.

2. Un capteur de pression selon la revendication 1 **caractérisé en ce que** ladite partie interne (12) est stabilisée par rapport au boîtier (1) son extrémité à l'opposée de la bride (10) transversalement à l'axe par l'intermédiaire d'une traverse (14).

3. Un capteur de pression selon la revendication 2 **caractérisé en ce que** la traverse (14) est fabriquée d'une membrane qui est souple dans la direction axiale et rigide dans la direction radiale.

4. Un capteur de pression selon la revendication 2 **caractérisé en ce que** la traverse (14) consiste en un joint torique (16) disposé entre la deuxième masse (7) et le boîtier (1).

5. Un capteur de pression selon la revendication 2 **caractérisé en ce que** la traverse (14) est fixée au boîtier (1) d'une manière coulissante axialement.

6. Un capteur de pression selon l'une des revendications précédentes **caractérisé en ce que** les cristaux (6, 8) et la troisième masse (13) sont pré-tendus par l'intermédiaire d'une douille de serrage (17) disposée entre la première masse (5) et la deuxième masse (7).

7. Un capteur de pression selon l'une des revendications précédentes **caractérisé en ce que** les cristaux (6, 8) sont fabriqués des matériaux piézoélectriques différents.

8. Un capteur de pression selon l'une des revendications précédentes **caractérisé en ce que** les cristaux (6, 8) présentent des orientations cristallographiques différentes.

9. Un capteur de pression selon l'une des revendications précédentes **caractérisé en ce que** le première cristal de mesure (6) présente un effet transversal.
